# EUROPEAN PATENT APPLICATION

(11) **EP 2 674 019 A1**
(43) Date of publication of application: **18.12.2013**
(21) Application number: 13171608.6
(22) Date of filing: 12.06.2013
(51) Int. Cl.: A01B 49/06, A01C 1/02, A01C 7/00

(54) **An apparatus for seeding germinated seeds or non-germinated seed pellets, and a method for providing and seeding germinated seeds**

(30) Priority: 14.06.2012 IT PD20120191
(71) Applicant: Gallo, Nicola, 35020 Candiana (PD) (IT); Gallo, Emanuela, 35020 Candiana (PD) (IT); Piva, Alberto, 35020 Candiana (PD) (IT); Piva, Tiziano, 35020 Arre (PD) (IT)
(72) Inventor: Gallo, Nicola, 35020 Candiana (PD) (IT); Gallo, Emanuela, 35020 Candiana (PD) (IT); Piva, Alberto, 35020 Candiana (PD) (IT); Piva, Tiziano, 35020 Arre (PD) (IT)
(74) Representative: Modiano, Micaela Nadia

(57) **Abstract**

An apparatus (10) for seeding germinated seeds or non-germinated seed pellets, comprising a first main frame (11), which supports a distribution tank (12) which contains a water-based mix with germinated seeds or non-germinated seed pellets or the like, a second frame (14) being coupled to the first frame (11) by means (13) for lifting and lowering it and supporting a seeding assembly (15), which in turn comprises
- means (16) for flattening the soil before seeding,
- means (17) for forming a furrow in the soil, which are adapted to form a plurality of laterally adjacent seed beds,
- a hydraulic system (18) for dispensing the water-based mix of pregerminated seeds or non-germinated seed pellets from the distribution tank 12 toward each one of the seed beds.

## Description

The present invention relates to an apparatus for seeding germinated seeds or non-germinated seed pellets, and also to a method for providing and seeding germinated seeds.

The object of the invention is to improve the seeding techniques in use today with conventional seeders.

The seeding techniques currently used make it possible to sow the seed in rows or by broadcasting, placing the seed on the soil and optionally covering it with a light layer of soil.

A subsequent step, if necessary, involves the positioning of a nonwoven fabric in order to favor the emergence of the germinated seeds from the soil, in order to make the degree of humidity proximate to the soil more constant and in order to protect the seeds and seedlings from damage by birds.

After this, an irrigation operation normally follows for the optimal germination of the sown plant.

Current seeding techniques are certainly very fast and simple, but they are not devoid of drawbacks which condition and can compromise especially the final outcome of the seeding, i.e. the harvest.

Problems linked to germination, to germination time and to temperatures are just some of the causes that can compromise the final harvest.

A further problem is limitation of cultivation cycles, anticipation of the crop, the water resources necessary for the plant to germinate, the damage from diseases that may strike the seeds while germinating in the soil, and competition with weeds.

There are various solutions that improve the seeding technique, and foremost of these is transplanting, i.e. seeding on potting compost in seedbeds and later transplantation to soil; there is certainly an improvement in cultivation times, since it shortens the cultivation cycle by at least one week, but the costs are high and are justified for some crops only.

Another technique is the 'floating system', a system of seeding on sheets of expanded polystyrene which float on water, in the absence of soil; the system requires considerable technical and economic capabilities of the producer and can only be used in a greenhouse.

The aim of the present invention is to provide an apparatus for seeding germinated seeds and also a method for providing and seeding pre-germinated seeds, which are capable of overcoming the limitations and drawbacks of the above-mentioned known techniques.

Within this aim, an object of the invention is to provide a method that ensures a high percentage of radication of the seeds used.

Another object of the invention is to provide a method that enables a greater uniformity of development of seedlings than in known cultivation techniques.

Another object of the invention is to provide a method that makes it possible to choose the time of seeding, separating it from the germination step.

Another object of the invention is to provide a method that makes it possible to have seedlings that are more developed than the weeds, and which are thus favored in competition with the latter, thus rendering the development of the weeds controllable.

Another object is thus to provide a method that makes it possible to preselect only the active seeds.

Another object of the invention is to provide a method that brings savings in cultivation costs and in crop losses that arise during the germination of the seeds in the soil.

Another object of the invention is to provide a method that brings major reductions in cultivation cycle times, with consequent optimization of use of the same plot of land.

Another obj ect of the invention is to provide an apparatus for seeding germinated seeds or non-germinated seed pellets, which can be implemented with conventional technologies.

This aim and these and other objects which will become more evident hereinafter are achieved by an apparatus for seeding germinated seeds or non-germinated seed pellets, **characterized in that** it comprises
a first main frame, which supports a distribution tank which contains a water-based mix with germinated seeds or non-germinated seed pellets or the like, a second frame being coupled to said first frame by means for lifting and lowering it and supporting a seeding assembly, which in turn comprises
- means for flattening the soil before seeding,
- means for forming a furrow in the soil, which are adapted to form a plurality of laterally adjacent and stable seed beds
- a hydraulic system for dispensing said water-based mix of germinated seeds or non-germinated seed pellets from said distribution tank toward each one of said seed beds.

The invention also relates to a method for providing and seeding germinated seeds, **characterized in that** it comprises the following operations:
- loading the seeds into a germination tank,
- loading water into the tank until the seeds are at least partially immersed,
- maintaining the level of the water by topping it up continuously and monitoring the temperature of said water,
- once germination of the seeds is complete, with protrusion of the root tip, eliminating the residual water,
- transferring the germinated seeds to a storage tank and cooling them to the vegetative zero temperature so as to block their further growth,
- transferring said germinated seeds from the storage tank to a distribution tank,
- preparing in said distribution tank a water-based mixture in order to keep said germinated seeds in suspension,
- loading plant protection products, such as for example bactericidal and fungicidal substances and the like,
- stirring said mixture in order to maintain a uniform spatial distribution of the germinated seeds,
- depositing a plurality of cordons of said mixture containing the germinated seeds in predefined corresponding furrows or seed beds in the soil.

Advantageously, a seeding mixture for keeping germinated seeds in suspension is **characterized in that** it comprises
- water,
- a gelling substance,
- a lubricating substance,
- plant protection products, such as for example fungistatic and bacteriostatic substances.

Further characteristics and advantages of the invention will become more apparent from the detailed description that follows of a preferred, but not exclusive, embodiment of the method, of the mixture and of the apparatus according to the invention; in particular, the apparatus is illustrated for the purposes of non-limiting example in the accompanying drawings wherein:
- Figure 1 is a perspective view of an apparatus according to the invention;
- Figure 2 is a side view of the apparatus in Figure 1;
- Figure 3 is a cutaway view of the seeding assembly of an apparatus according to the invention;
- Figure 4 is a view of a detail of the seeding assembly;
- Figure 4a is a cross-sectional front elevation view of a component of the seeding assembly;
- Figures 4b, 4c and 4d each show a different cross-sectional view of a seed bed that can be obtained with a corresponding furrow opening disk of the seeding assembly;
- Figure 5 is a view from behind of a seeding assembly according to the invention;
- Figure 6 is a cross-sectional view along the line VI-VI in Figure 5;
- Figure 7 is a perspective view of the seeding assembly;
- Figure 8 is a diagram of the hydraulic system of the seeding assembly of the apparatus according to the invention;

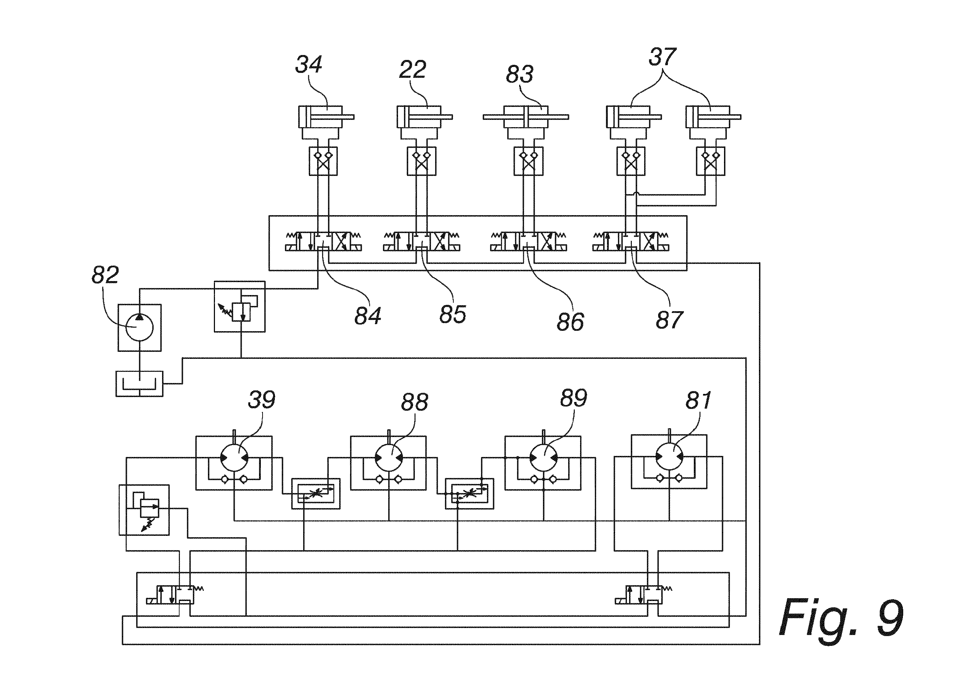

- Figure 9 is a hydraulic diagram of the apparatus according to the invention.

A method for providing and seeding germinated seeds according to the invention comprises the following operations:
- loading the seeds into a germination tank;
- loading water into the tank until the seeds are partially immersed.

The seeds are kept in suspension and gently stirred, for example by being carried inside a rotating basket with a vertical axis, or by way of blowing air into the tank without any rotating basket.

Blowing air into the water in the germination tank facilitates the oxygenation of the water and the remixing of the seeds without the seeds being struck and damaged by mechanical elements for stirring the water; the seeds thus have the necessary water and air for extending root tips, without these being damaged.

The method involves keeping the water level constant, with continuous changing of the water, and controlling the temperature of the water.

Once germination of the seeds is complete, with protrusion of the root tip, the residual water is discharged from the tank.

Afterwards, the germinated seeds are transferred to a storage tank, where they are cooled to a temperature that is such as to stop the process of germination of the seeds.

Such germination steps of the seeds and subsequent stopping of growth make it possible to prolong the life of the germinated seeds thus enabling flexible planning of the subsequent seeding operations.

The subsequent operations for seeding involve:
- preparing in a seeding tank, described and illustrated hereinbelow, a seeding mixture in order to keep the germinated seeds in suspension, such seeding mixture comprising a gelling substance, i.e. a superabsorbent polymer, and a lubricating substance, as described in more detail hereinbelow,
- adding a preset quantity of water,
- loading plant protection products, such as for example bactericidal and fungicidal substances and the like,
- loading a natural coloring substance,
- transferring the germinated seeds from the storage tank to the seeding tank,
- stirring such mixture in order to maintain a uniform spatial distribution of the germinated seeds; in this step the root tips of the germinated seeds are protected by the gelled mixture that is formed;
- depositing a plurality of cordons of seeding mixture, with the germinated seeds, in predefined corresponding furrows, or seed beds, in the soil, the furrows being provided by way of an apparatus 10 described in more detail hereinbelow.

The seeding mixture with the germinated seeds contains fully germinated seeds, or partially germinated seeds, or non-germinated seeds, naked seeds or seed pellets, or seeds packaged and protected in a soluble shell, such seed pellets being understood to be conventional.

The method according to the invention comprises, following the operation of depositing a plurality of cordons of seeding mixture with the germinated seeds in predefined corresponding furrows, or seed beds, an operation of covering the cordon of mixture with partial closure of the furrow or seed bed.

Such a method makes it possible to achieve the intended aim and objects.

In fact with such a method it is possible to preselect only the active seeds, eliminating the seeds that have not germinated in the germination tank.

The active and germinated seeds ensure a high percentage of radication, since this method nearly completely eliminates the loss of seeds typical of direct sowing in soil owing to failure to germinate, a frequent event caused by unsuitable environmental conditions; owing to diseases arising between seeding and the radication of the root tip of the seed in the soil; and/or owing to the action of animals such as birds and insects.

With the method according to the invention, a significant reduction in the consumption of seeds is also achieved, since radication is ensured and favored for substantially all of the seeds used.

What is more, with the method according to the invention the duration of a cultivation cycle in the soil is drastically reduced, since the time between the seeding of germinated seeds and the harvest is drastically reduced, and consequently the plant is brought to market earlier.

This furthermore makes it possible to optimize the use of the same plot of land, which by accommodating shorter cycles can thus accommodate many more cultivation cycles than carried out with conventional techniques, and with consequent increases in production per hectare, the latter parameter being critical especially for crops grown in greenhouses.

Moreover, with the invention a method is provided which enables the uniform growth of the plant, since germination outside the soil involves the substantial simultaneity of radication of the germinated seeds.

Also, with the invention a method is provided that makes it possible to anticipate the development of the seedlings with respect to weeds, with the advantage of controlling the development and spread of such weeds, with consequent reduction of the negative effects deriving from competition between seedlings and weeds.

In synthesis, with the invention a method is devised that results in obtaining significant economic, agricultural and quantitative benefits, in terms of lower seeding costs, in terms of lower crop losses, in terms of better and more uniform quality of the products, and in terms of increased productivity of the land used for the crop.

The invention also relates to a seeding mixture for keeping in suspension and seeding germinated seeds, which comprises:
- water, with germinated seeds,
- a gelling substance, i.e., a superabsorbent polymer or the like,
- a lubricating substance,
- plant protection products, such as for example fungistatic and bacteriostatic substances.

The germinated seeds originate from the first part of the method according to the invention, as described above.

It should be noted that the water with germinated seeds can contain seeds of a same plant, or seeds of different plants, also at a different stage of germination, in order to obtain an integrated crop of mixed leaf plants.

The superabsorbent polymer, i.e. the gelling substance, is constituted, for example, by potassium polyacrylate, preferably fine-grained, for example between 100 and 150 microns, and in any case adapted to the size of the seed.

The low granulometry ensures the fluidity of the mixture and the evenness of arrangement of the seeds in the volume of mixture in the seeding tank, since the germinated seeds arrange themselves in the spaces between the granules of potassium polyacrylate.

The gelification of the mixture determines its density and ensures its stability, and makes it possible to keep the seeds in suspension distributed uniformly, and to protect their root tips in the passage from the seeding tank up to being deposited in the soil, and at the same time it determines a fluidity of the mixture itself that is such as to make possible its passage through the seeding tubes of an adapted apparatus 10, described below, with efficient control of the volume of flow and of the quantity of seeds deposited per square meter of soil.

The lubricating substance is constituted by liquid petrolatum, preferably 50% by weight with respect to the superabsorbent polymer.

The presence of the liquid petrolatum is essential in order to make possible and achieve the total and uniform dissolution of the superabsorbent polymer when water is added to the mixture, preventing its hardening.

The gelifying superabsorbent polymer, associated with the gelling substance, is present in a quantity range of between 10 and 13 grams per liter of water.

The mixture also comprises a natural coloring agent, so as to facilitate visual control of the flow of the mixture in the hydraulic system of the seeding assembly of the apparatus 10 used, i.e. in order to highlight any blockages and interruptions in the flow; the coloring agent obviously also makes it possible to verify the correct depositing of the cordon of mixture on the soil.

The invention also relates to an apparatus for seeding germinated seeds or non-germinated seed pellets, which is generally designated, in the figures, with the reference numeral 10.

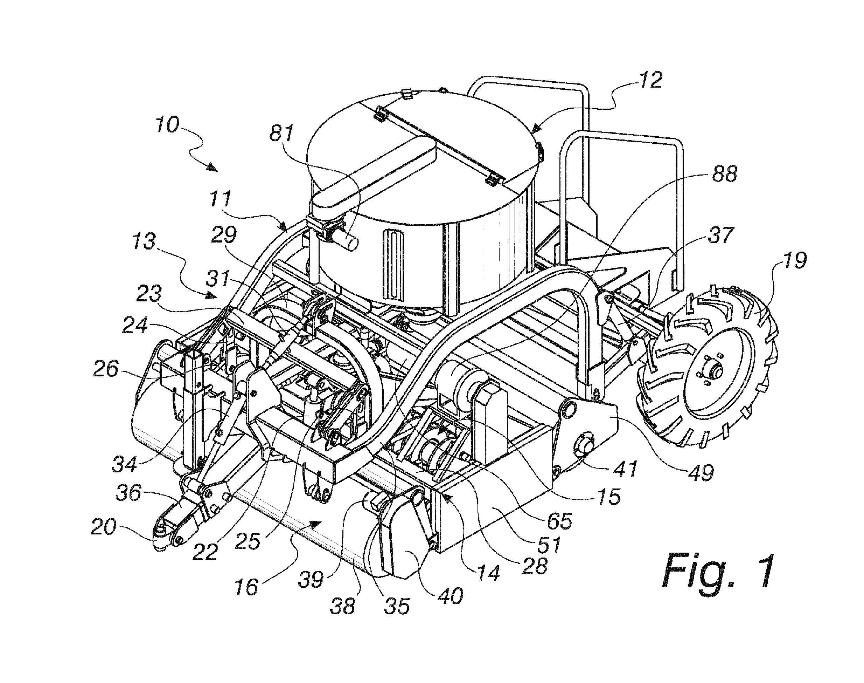

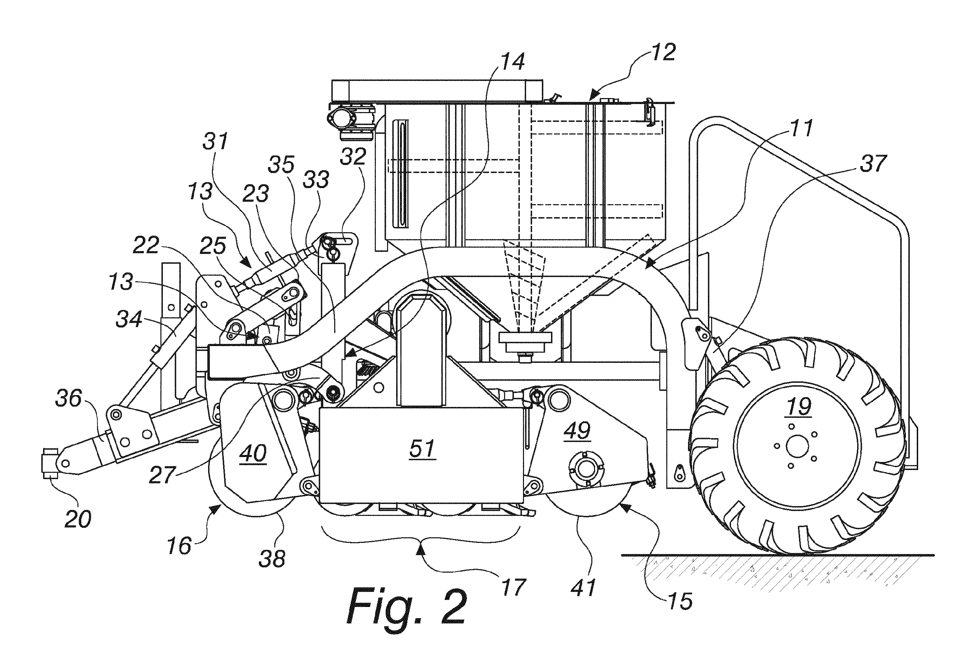

Such apparatus 10 comprises a first, main frame 11, which can clearly be seen in Figures 1 and 2 and which supports a seeding tank 12 containing a water-based mix with germinated seeds, as described above, or non-germinated seed pellets or the like.

Such first frame 11 is coupled to a second frame 14, supporting a seeding assembly 15, with means 13 for lifting and lowering it.

Such seeding assembly 15 in turn comprises:
- means 16 for flattening the soil before seeding,
- means 17 for forming a furrow in the soil, which are adapted to form a plurality of laterally adjacent seed beds, i.e. furrows,
- a hydraulic system 18 for dispensing the water-based mix of germinated seeds or non-germinated seed pellets from the seeding tank 12 toward each one of the seed beds.

In the embodiment described herein, by way of non-limiting example of the invention, of the apparatus 10, the first frame 11 has guiding rear wheels 19 and a front towing hook 20.

It should be noted that such apparatus 10 can also be made completely transportable by an agricultural vehicle, such as a tractor, or partially towable, with the distribution tank installed on the towing vehicle, or vice versa, with the seeding assembly supported by the towing vehicle and the tank towed on a trailer, or the apparatus can be provided as a self-propelled vehicle, i.e. provided with an engine and driving means.

The means 13 for lifting and lowering the second frame 14 with respect to the first frame 11 are constituted substantially by a three-point coupling.

Such three-point coupling comprises a hydraulic actuator 22 which is adapted to move a transverse lifting bar 23, from which two third-class levers 26 and 27 are suspended by corresponding supporting tension members 24 and 25, each third-class lever forming a lifting arm and being pivoted at one end to the first frame 11, and at the opposite end to the second frame 14.

The third-class levers 26 and 27 define the two lower coupling points of the three-point coupling.

The second frame 14 is substantially quadrangular, and an arch 29 extends upward from its front crossmember 28, a strut 31 being pivoted to the top of such arch, its opposite end being pivoted to the first frame 11; such strut 31 defines the third, upper point of the three-point coupling.

The strut 31 is pivoted to the arch 29 by means of a pivot inserted in two mutually opposite slots 32 which are formed on corresponding facing brackets 33, which are welded to the top of the arch 29.

Thus, once the seeding assembly 15 is placed on the ground, it is towed, by way of the second frame 14, by the two third-class levers 26 and 27, while the upper pin forming the third point of attachment, being able to float in the slots 32, allows the seeding assembly 15 to oscillate with respect to the two lower points of attachment, and to slide while following the ground.

The first frame 11 has means for adjusting its distance from the soil.

Such means for adjusting the distance from the soil are constituted
- by a front hydraulic actuator 34, which is interposed between the central structure 35 of the first frame 11 and the drawbar 36 of the first frame 11; the drawbar 36 is articulated to the central structure 35 about a horizontal axis;
- and by two rear actuators 37, one per wheel 19, which are interposed between the central structure 35 and the axle of the rear wheels 19.

By actuation of the front actuator 34 and the rear actuators 37, the first frame 11 is brought to a configuration selected from:
- a first configuration, raised, for movement not connected to seeding, for example transport by road,
- a second configuration, lowered, for loading the seeding tank 12;
- a third configuration, intermediate and variable, for seeding operations.

The flattening means 16 are constituted by a front presser roller 38 which is supported by the second frame 14 and moved by corresponding motor drive means, for example by a hydraulic motor 39 and by a transmission belt, which is not shown in the figures and is protected by a housing 40.

The seeding assembly 15 also comprises a rear, idle presser roller 41.

The presser rollers 38 and 41 are coupled to the second frame 14 by way of means 42 for the fine adjustment of the furrowing and seeding depth.

Such means 42 of fine adjustment of the furrowing and seeding depth are constituted by two arms for raising and lowering 43 and 44, each of which is adapted to move a crossmember, 45 and 46 respectively, the ends of which are fixed to two opposite roller-supporting plates, two first plates 47 and 48 supporting the front roller 38, two second plates 49 and 50 supporting the rear roller 41.

Each pair of roller-supporting plates 47, 48 and 49, 50, is pivoted below the lateral bulkheads 51 and 52, which are supported by the second frame 14, for protecting the seeding assembly 15.

Of the arms for raising and lowering 43 and 44, a first arm 43 operates on a front crossmember 45 which is associated with the front roller 38, and the second arm 44 operates on a rear crossmember 46 which is associated with the rear roller 41.

The two raising arms 43 and 44 are commanded by way of a symmetrical interfixed lever 53 which can rotate about a vertical axis by way of a shaft 54, to which the lever 53 is fixed, the rotation of which is in turn governed, by way of an assembly 56 for transmission of rotation between two perpendicular or skewed axes, based on gearwheels or belts or the like, which should be understood as being of a conventional type, by a crank 55 that extends laterally from a lateral bulkhead of the seeding assembly 15.

Rotating the crank 55 by a certain angle results in the rotation of the interfixed lever 53, which in turn raises or lowers the corresponding crossmember 45 or 46, with consequent raising or lowering of the corresponding presser roller 38 or 41 with respect to the second frame 14, to which the means for forming a furrow and the hydraulic system 18 are fixed.

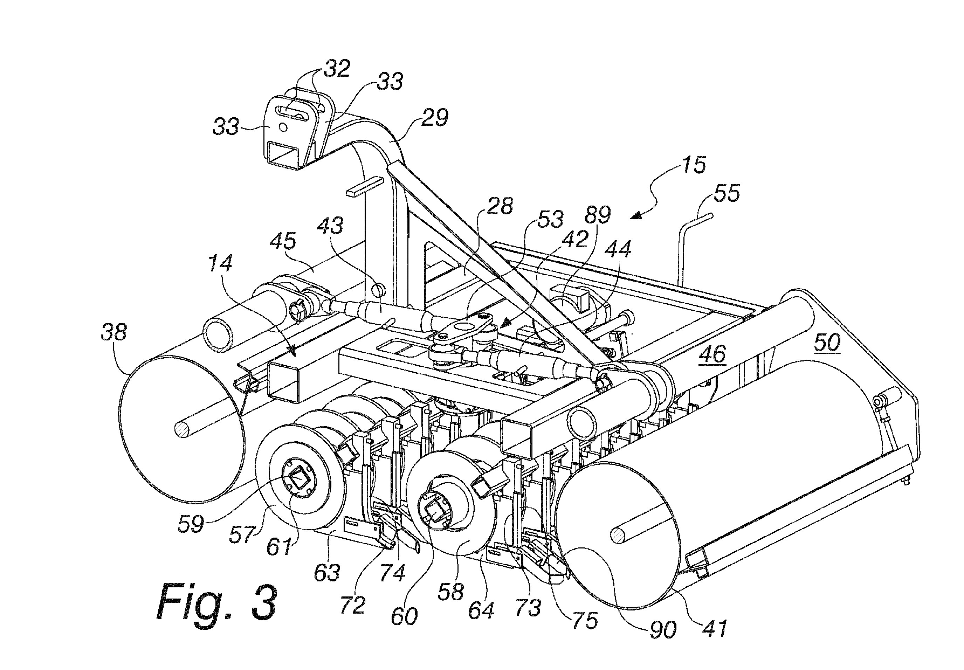

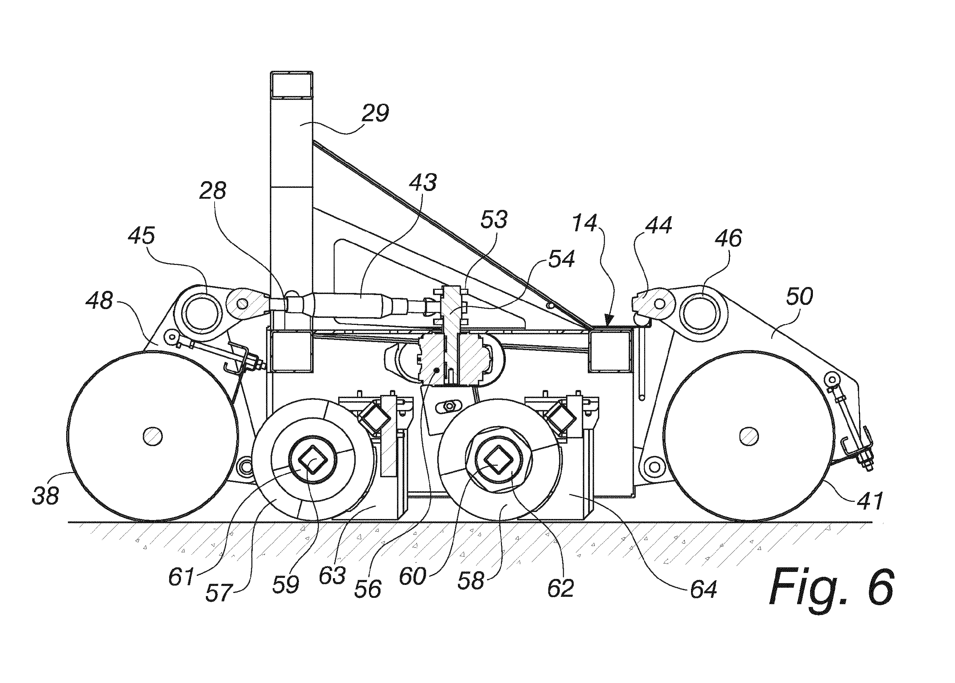

The means for forming a furrow in the soil 17 are constituted by a series of furrow opening disks 57, 58, which are keyed and uniformly spaced on two drive shafts 59 and 60 which are parallel in the anterior-posterior direction, which can clearly be seen in particular in Figures 3 and 6.

The furrow opening disks 57 of a first drive shaft 59 are positioned so as to form a furrow, or seeding bed, in the soil, between two consecutive furrows formed by corresponding furrow opening disks 58 of a second, nearby drive shaft 60.

Such furrow opening disks are constituted by metal disks which are keyed by way of corresponding flanges 61 and 62 on the drive shafts 59 and 60, which are, for example, square in cross-section.

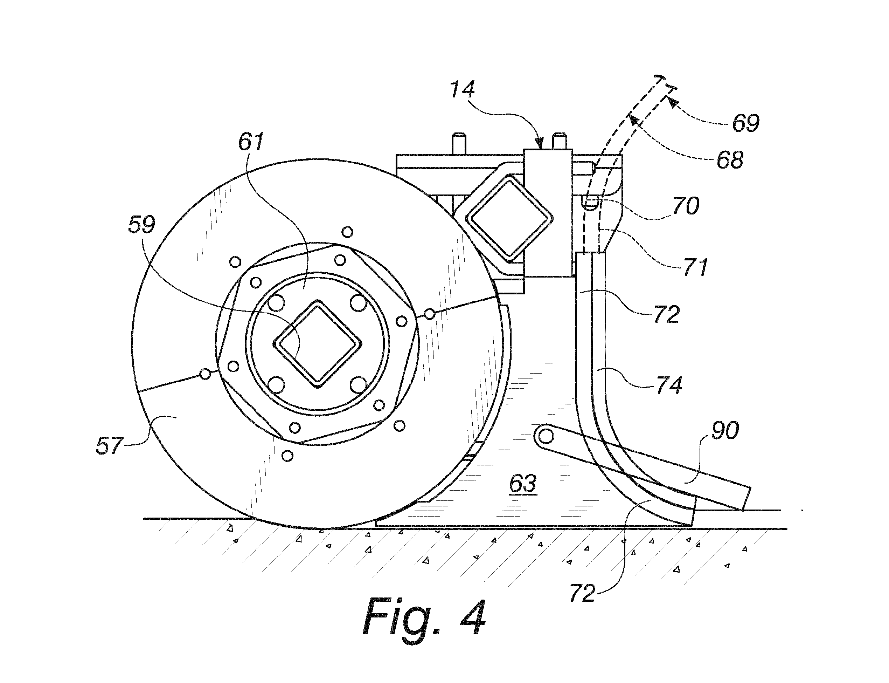

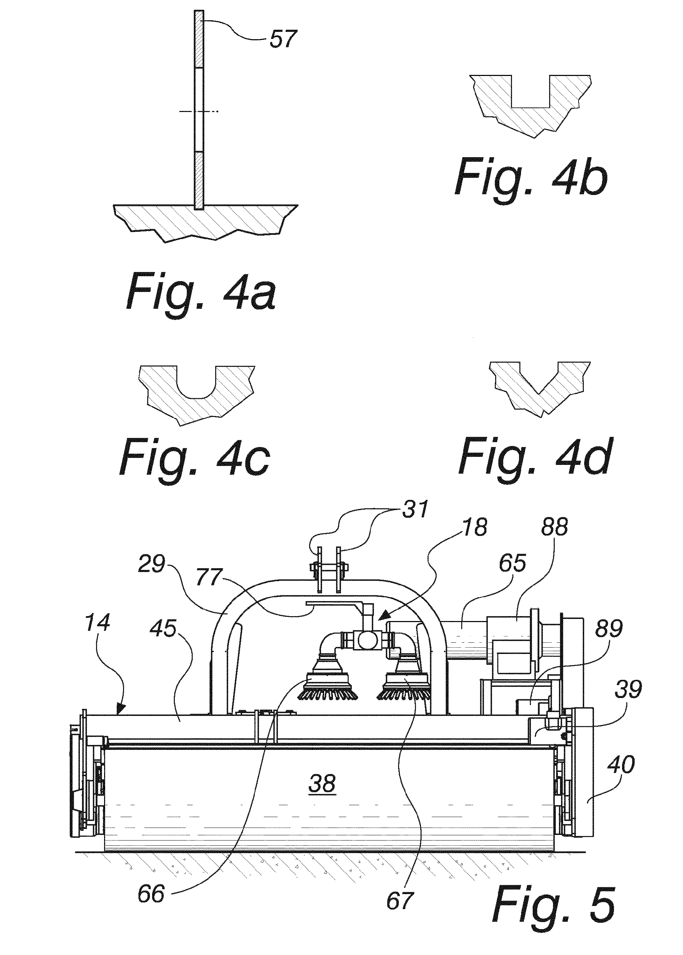

The radial cross-section profile of the furrow opening disks 57 and 58 can be flat, as in Figures 4a and 4b, or curved, as in Figure 4c, or angled, as in Figure 4d, or of a different shape, according to the seeding requirements.

Arranged to the rear of each furrow opening disk 57 and 58 is a blade, 63 and 64 respectively, for passing the furrow again and for scraping the corresponding furrow opening disk; the furrow repassing blades 63 and 64 are clearly visible in Figures 3 and 4.

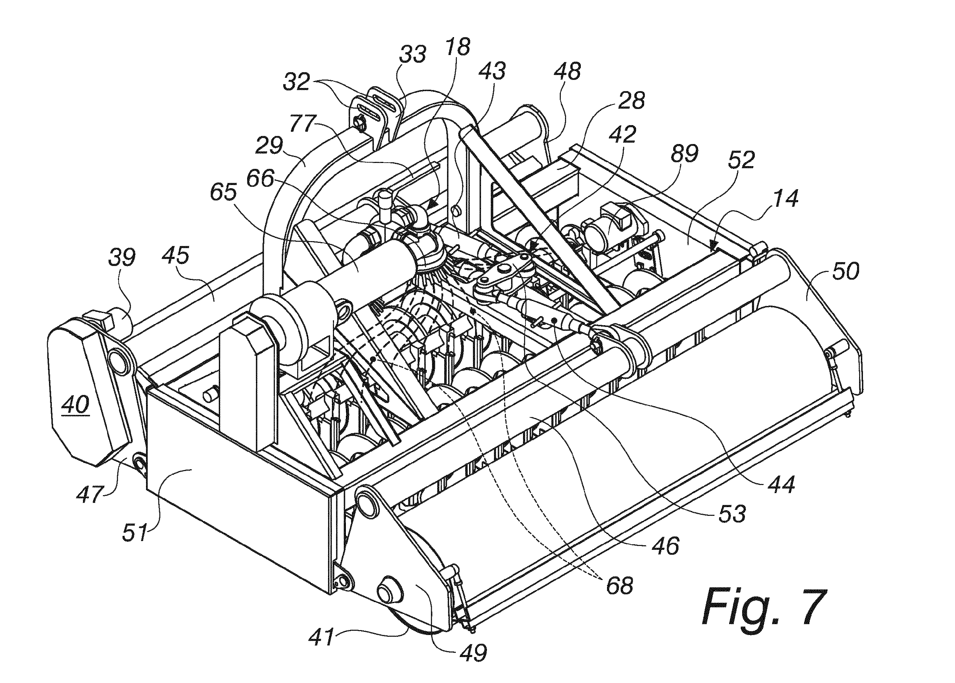

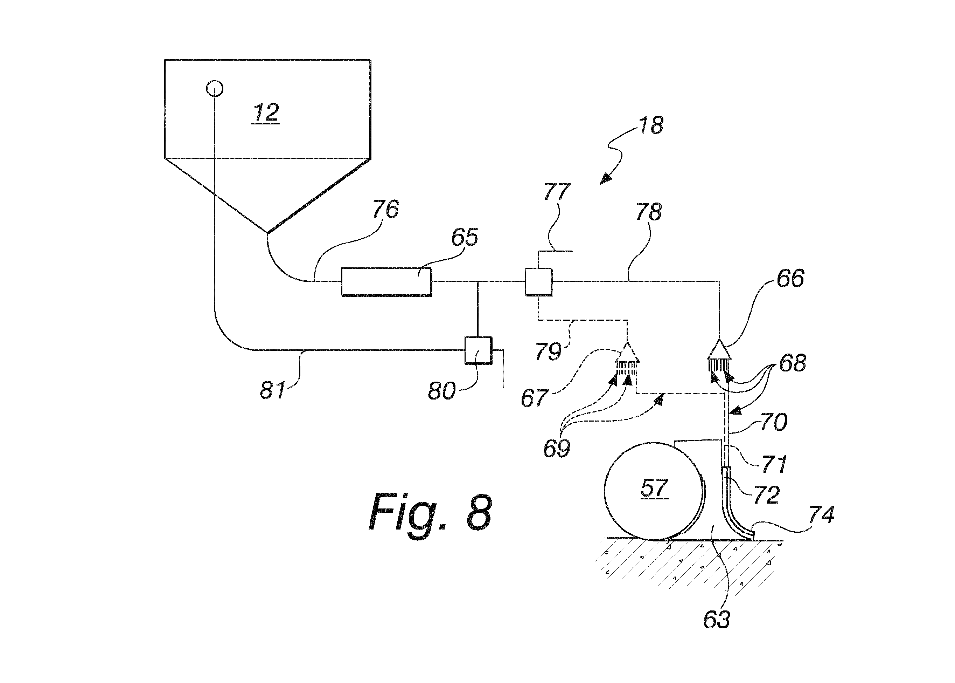

The hydraulic system 18, shown in schematic form in Figure 8, comprises a volumetric pump 65 which is adapted to propel the mixture of gelified water and germinated seeds, originating from the seeding tank 12, toward two diffusers 66 and 67, which can be clearly seen in Figures 5 and 7, from each one of which as many seeding tubes 68 and 69 branch out as there are furrow opening disks 57 and 58.

It should be noted that the diffusers can also be more than two in number, according to technical requirements.

Each diffuser is adapted to seeds of different and corresponding sizes, and similarly for the seeding tubes; diffusers and corresponding seeding tubes are thus activated according to the type and gauge of the seeds to be sown.

Each seeding tube 68 and 69 extends to the vicinity of the soil and is fixed at the rear to the corresponding furrow repassing blade 63 and 64.

In particular, in the present embodiment of the apparatus 10 according to the invention, which is a non-limiting example thereof, the seeding tubes comprise a flexible portion, made of plastic material, 70 and 71 respectively, and a rigid end portion 72 and 73.

The rigid end portion 72 and 73 is a curved metal tube that extends along the rear edge of each repassing blade 63 and 64, while the flexible portion 70 and 71 extends between the diffuser 66 and 67 and the corresponding rigid end portion 72 and 73.

Each diffuser 66 and 67 is used for all the furrow opening disks 57 and 58, and ensures the uniform distribution of the flow of seeding mixture through the seeding tubes.

Each repassing blade supports two overlapping rigid end portions, two lower ones 72 and 73 and two upper ones 74 and 75.

The lower rigid end portions 72 and 73 form part of the seeding tubes 68 which are connected to a first diffuser 66, while the upper rigid end portions 74 and 75 form part of the seeding tubes 69 which are connected to the second diffuser 67.

Each repassing blade 63 and 64 supports, at the rear of the outlet of the seeding tubes, a furrow-covering bar 90, which is adapted to at least partially cover the cordon of mixture deposited in the furrow, before the passing of the rear presser roller 41.

The hydraulic system 18 is completed by
- an intake tube 76 for connection between the bottom of the tank 12 and the volumetric pump 65,
- a cock 77 for selecting the number of diffusers to use, one or both,
- corresponding delivery tubes 78 for a first diffuser 66 and 79 for the second diffuser 67,
- a bypass valve 80 and a return tube 81 which form a safety recirculation system in the event of blockages in the diffusers and in the seeding tubes.

Inside the seeding tank 12 there are naturally means of mixing the mixture, which should be understood as being of a known type.

Such mixing means can for example be a plurality of radially-extending bars, which are supported by a vertically rotating shaft, which is in turn moved by a hydraulic motor, 81 in Figures 1 and 2, and corresponding torque transmission means, for example a chain or belt.

The dosage of the various components of the seeding mixture is controlled by an integrated weighing system, not shown for the sake of simplicity.

A weighing apparatus, associated with the seeding tank, acts as a checking means for a minimum seeding mixture reserve in the seeding tank, by emitting a signal to shut down the machine and reload a new quantity of seeding mixture.

Together with the radial bars, deflector blades can also be fixed to the rotation shaft, and arranged to rotate on the bottom of the tank in order to lift the part of mixture resting on the bottom, and a screw feeder for reascent extending around the drive shaft itself.

The apparatus 10 has a hydraulic circuit which with a single hydraulic pump 82 governs, in series, the front hydraulic actuator 34 of the drawbar 36, the hydraulic actuator 22 for raising the second frame 14, a hydraulic actuator 83 for steering the rear wheels 19, and the rear hydraulic actuators 37, by way of corresponding directional solenoid valves 84, 85, 86 and 87.

The same line of the hydraulic circuit powers the hydraulic motor 81 of the means for mixing the mixture in the distribution tank 12, as well as the hydraulic motor 39 of the front presser roller 38, the hydraulic motor 88 of the volumetric pump 65, and the hydraulic motor 89 for moving the shafts supporting the furrow opening disks.

The apparatus 10 according to the invention described herein thus enables the stirring and seeding of germinated seeds with no damage, at any stage of development and condition, both already completely germinated, with the root tips completely or only partially protruding, or naked seeds or seed pellets, thanks to the formation and handling of a cordon of the gelified water-based mixture deposited continuously in the furrows, or in the seed beds, made by the furrow opening disks.

The apparatus 10 prepares the seed bed precisely by pressing the soil both on the bottom and on the sides using the furrow opening disks 57 and 58 at a controlled speed coordinated with the velocity of advancement of the apparatus 10 in its entirety, the disks of which rotate in the same direction as or in the opposite direction to that of advancement.

Such apparatus 10, thanks to the fine adjustment means 42 of the seeding depth and to the blades 63 and 64 for repassing the furrows made by the furrow opening disks 57 and 58, ensures that such furrows/seed beds have, and maintain, a uniform cross-section, depth and width and that they are clean, independent of any variable factor and up until the depositing of the cordon of seeds/gel mixture.

The apparatus 10 according to the invention enables and ensures a seeding with the desired density of seeds per square meter, thanks to the fine adjustment of the variable-capacity volumetric pump 65 for managing the flow of the seeds/gel mixture.

Moreover, the apparatus 10 according to the invention, by way of suitable precise selection of the speed of rotation of the hydraulic motor 88 of the volumetric pump 65, and of the hydraulic motor 89 of the furrow opening disks, as a function of the velocity of the hydraulic motor 39 of the front presser roller 38, enables the fine adjustment of the flow of gelified mixture with the germinated seeds.

In practice it has been found that the invention fully achieves the intended aim and objects.

In particular, with the invention a method is provided for providing and seeding germinated seeds, which ensures a high percentage of radication of the seeds used.

In fact, with the invention a method is provided which enables a greater uniformity of development of the seedlings than in conventional agricultural techniques, thanks to the step of germination outside the soil.

Moreover, with the invention a method is provided which makes it possible to select the time of seeding, separating it from the germination step.

What is more, with the invention a method is provided which makes it possible to preselect only the active seeds.

Moreover, with the invention a method is provided that brings savings in cultivation costs and in crop losses that arise during the germination of the seeds in the soil, as well as a method that brings major reductions in cultivation cycle times, with consequent optimization of use of the same plot of land.

Last but not least, with the invention an apparatus is provided for the seeding of germinated seeds or non-germinated seed pellets, which can be produced with technologies of the conventional type.

The invention, thus conceived, is susceptible of numerous modifications and variations, all of which are within the scope of the appended claims. Moreover, all the details may be substituted by other, technically equivalent elements.

In practice the materials employed, and the contingent dimensions and shapes, may be any according to requirements and to the state of the art.

The disclosures in Italian Patent Application No. PD2012A000191 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. An apparatus (10) for seeding germinated seeds or non-germinated seed pellets, **characterized in that** it comprises
a first main frame (11), which supports a distribution tank (12) which contains a water-based mix with germinated seeds or non-germinated seed pellets or the like, a second frame (14) being coupled to said first frame (11) by means (13) for lifting and lowering it and supporting a seeding assembly (15), which in turn comprises
- means (16) for flattening the soil before seeding,
- means (17) for forming a furrow in the soil, which are adapted to form a plurality of laterally adjacent and stable seed beds
- a hydraulic system (18) for dispensing said water-based mix of germinated seeds or non-germinated seed pellets from said distribution tank (12) toward each one of said seed beds.

2. The apparatus according to claim 1, **characterized in that** said first frame (11) has rear wheels (19) and a front towing hook (20).

3. The apparatus according to one or more of the preceding claims, **characterized in that** said lifting and lowering means (13) are constituted substantially by a three-point coupling.

4. The apparatus according to one or more of the preceding claims, **characterized in that** said three-point coupling comprises a hydraulic actuator (22), which is adapted to move a transverse lifting bar (23) from which two third-class levers (26, 27) are suspended by corresponding supporting tension members (24, 25), each third-class lever forming a lifting arm, each third-class lever being pivoted to said first frame (11) at one end and to said second frame (14) at the opposite end, said third-class levers (26, 27) defining the two lower coupling points of said three-point coupling.

5. The apparatus according to one or more of the preceding claims, **characterized in that** said second frame (14) is substantially quadrangular, and **in that** an arch (29) extends upward from its front crossmember (28), a strut (31) being pivoted to the top of said arch, its opposite end being pivoted to said first frame (11), said strut (31) defining the third, upper point of said three-point coupling.

6. The apparatus according to one or more of the preceding claims, **characterized in that** said first frame (11) has means for adjusting its distance from the soil.

7. The apparatus according to claim 6, **characterized in that** said means for adjusting the distance from the soil are constituted
- by a front hydraulic actuator (34), which is interposed between the central structure (35) of the first frame (11) and the drawbar (36) of said first frame (11), said drawbar (36) being articulated to said central structure (35) about a horizontal axis,
- and by at least one rear actuator (37), which is interposed between the central structure (35) and the axle of the rear wheels (19).

8. The apparatus according to one or more of the preceding claims, **characterized in that** said flattening means (16) are constituted by a front presser roller (38), which is supported by said second frame (14) and is moved by corresponding motor drive means.

9. The apparatus according to one or more of the preceding claims, **characterized in that** said means (17) for forming a furrow in the soil are constituted by a series of laterally adjacent furrow opening disks (57, 58), which are keyed and uniformly spaced on a single drive shaft or on a plurality of drive shafts (59, 60), which are parallel in the anterior-posterior direction, the furrow opening disks (57) of a first drive shaft (59) being arranged so as to form a furrow, or seed bed, between two consecutive furrows formed by corresponding furrow opening disks (58) of a second, nearby drive shaft (60).

10. The apparatus according to claim 9, **characterized in that** a blade (63, 64) for passing the furrow again and for scraping the corresponding furrow opening disk is arranged to the rear of each furrow opening disk (57, 58).

11. The apparatus according to one or more of the preceding claims, **characterized in that** said hydraulic system (18) comprises a volumetric pump (65) which is adapted to propel the mix with germinated seeds, which originates from a seeding tank (12), toward at least one diffuser (66), from which as many seeding tubes (68) as there are furrow opening disks (57, 58) branch out, each seeding tube (68) extending to the vicinity of the soil and being fixed at the rear to the corresponding furrow passing blade (63, 64).

12. The apparatus according to one or more of the preceding claims, **characterized in that** said seeding assembly (15) also comprises a rear flattening roller (41), said front and rear rollers being supported by said second frame by the interposition of means (42) for adjusting the furrowing and seeding depth.

13. A method for providing and seeding germinated seeds, **characterized in that** it comprises the following steps:
- loading the seeds into a germination tank,
- loading water into the tank until the seeds are at least partially immersed,
- maintaining the water level by topping it up continuously and monitoring the temperature of said water,
- once germination of the seeds is complete, with protrusion of the root tip, discharging the residual water,
- transferring the germinated seeds to a storage tank and cooling them to the vegetative zero temperature so as to block their further growth,
- transferring said germinated seeds from the storage tank to a distribution tank,
- preparing in said distribution tank a water-based mixture in order to keep said germinated seeds in suspension,
- loading plant protection products, such as for example bactericidal and fungicidal substances and the like,
- stirring said mixture in order to maintain a uniform spatial distribution of the germinated seeds,
- depositing a plurality of cordons of said mixture containing the germinated seeds in predefined corresponding furrows or seed beds in the soil.

14. The method according to claim 13, **characterized in that** said mixture with the germinated seeds contains fully germinated seeds or partially germinated seeds.

15. The method according to claim 13, **characterized in that** said mixture contains non-germinated seeds, naked seeds or seed pellets.

16. The method according to one or more of claims 13 to 15, **characterized in that** it comprises, following the operation of depositing a plurality of cordons of mixture with germinated seeds in predefined corresponding furrows or seed beds in the soil, an operation for covering the cordon of mixture with partial closure of the furrow or seed bed.

17. A seeding mixture for keeping in suspension and seeding germinated seeds, **characterized in that** it comprises
- water,
- a gelling substance, i.e., a superabsorbent polymer or the like,
- a lubricating substance,
- plant protection products, such as for example fungistatic and bacteriostatic substances.

18. The mixture according to claim 17, **characterized in that** said gelling substance is constituted by potassium polyacrylate, preferably of a fine-grained type adapted to the size of the germinated seed.

19. The mixture according to one or more of claims 17-18, **characterized in that** said lubricating substance is constituted by liquid petrolatum, preferably 50% by weight with respect to the superabsorbent polymer.

20. The mixture according to one or more of claims 17 to 19, **characterized in that** the combination of said gelling substance with said lubricating substance is present in a range of quantity of between 10 and 13 grams per liter of water.

21. The mixture according to one or more of claims 17 to 20, **characterized in that** it comprises a natural coloring agent.
